## Europäisches Patentamt

## European Patent Office

## Office européen des brevets

(19)

(11) Veröffentlichungsnummer: **0 253 801**
**B1**

(12)

# EUROPÄISCHE PATENTSCHRIFT

(45) Veröffentlichungstag der Patentschrift:
**26.09.90**

(51) Int. Cl.⁵: **F16B 39/00, B60R 19/24**

(21) Anmeldenummer: **87890171.9**

(22) Anmeldetag: **13.07.87**

(54) Befestigung an Profilschienen.

(30) Priorität: **16.07.86 AT 1936/86**

(43) Veröffentlichungstag der Anmeldung:
**20.01.88 Patentblatt 88/3**

(45) Bekanntmachung des Hinweises auf die Patenterteilung:
**26.09.90 Patentblatt 90/39**

(84) Benannte Vertragsstaaten:
**CH DE LI NL**

(56) Entgegenhaltungen:
**DE-A- 2 812 503**
**FR-A- 2 337 301**
**US-A- 4 183 387**

(73) Patentinhaber: **Austria Metall Aktiengesellschaft,
A-5282 Braunau am Inn(AT)**

(72) Erfinder: **Bergström, Lars, Riddar Thures Vag 8,
S-43321 Partille(SV)**

(74) Vertreter: **Hain, Leonhard, Dipl.-Ing., Tal 18/IV,
D-8000 München 2(DE)**

## Beschreibung

Die Erfindung betrifft eine Befestigung einer Profilschiene, insbesondere einer Stoßstange und dgl., mittels Schrauben, gemäß dem Oberbegriff des Patentanspruches 1.

Es ist in der Praxis bekannt, an Bauteilen zu befestigende Profilschienen mit Nuten zum Einsetzen von Hammerkopfschrauben zu versehen, wodurch diese Profilschienen stufenlos verschiebbar sind und damit eine leichte Anpassung auch an unterschiedliche Bohrungsabstände ermöglichen. Nachteilig hierbei ist eine geringe Festigkeit, weil die Schraubenköpfe von Hammerkopfschrauben sehr kleine Anlageflächen an den einwärts stehenden Schenkeln der hinterschnittenen Nuten aufweisen und daher bei großen Belastungen ein Aufweiten oder Ausreißen der Nuten gegeben ist. Auch besteht schon bei zu starkem Anziehen der Schrauben die Gefahr des Abrutschens oder Aufweitens. Ebenso ist bei Sechskantschrauben ein Durchdrehen der Köpfe infolge Verformung und Aufweitung der Nuten möglich. Zur Befestigung eines Werkstückes auf einem Werkzeugmaschinenbett ist als Drehsicherung zwischen einem Schraubenkopf und einer T-förmigen Nut bekannt (US-A 4 183 387), ein profiliertes Einsatzstück aus formgepreßtem Blech in die Nut einzusetzen, um den Zwischenraum zwischen dem kleineren Schraubenkopf und der größeren Nut auszufüllen. Wegen der formstabilen Nut in einem massiven Gußeisenkörper braucht das Einsatzstück selbst keine große Festigkeit aufzuweisen. Aber zum Einsetzen in eine an sich verformbare Profilschiene vermag auch dieses Einsatzstück nicht die gewünschte Drehsicherheit zu gewährleisten.

Der Erfindung liegt daher die Aufgabe zugrunde, eine Befestigung für eine Profilschiene, insbesondere Stoßstange und dgl., mittels Schrauben vorzuschlagen, wobei ein in ein profiliertes Einsatzstück eingesetzter Schraubenkopf bzw. Schraubenmutter verdrehungs- und verformungssicher in der zu befestigenden Profilschiene untergebracht ist.

Diese Aufgabe wird durch eine Profilschienenbefestigung nach dem Oberbegriff des Patentanspruches 1 erfindungsgemäß durch die kennzeichnenden Merkmale dieses Patentanspruches gelöst.

Eine vorteilhafte Weiterentwicklung der Erfindung ist in einem Unteranspruch erwähnt.

Durch die Ausbildung eines Einsatzstückes in Form eines Strangpreßprofilabschnittes mit einer Längsnut, die dem Schraubenkopf bzw. der Schraubenmutter angepaßt ist, erhält der einzusetzende Schraubenkopf bzw. die Schraubenmutter einen Sitz, der nicht nur verdrehungssicher, sondern auch verformungssicher ist; denn der massive und formstabile Strangpreßprofilabschnitt verhindert selbst unter hoher Belastung ein Durchdrehen des Schraubenkopfes und eine Verformung der Profilschiene. Die Formfestigkeit dieser Befestigungsart wird noch dadurch erhöht, daß der Strangpreßprofilabschnitt mit den auf seiner der Nutenöffnung der Profilschiene zugewandten Seite eingeformten Nuten mit den einwärts stehenden Rippen an den Nutschenkeln der Profilschiene in Eingriff stehen und dadurch den Strangpreßprofilabschnitt formschlüssig in der hinterschnittenen Profilschienen-Nut sicher gegen äußere Krafteinflüsse hält. Durch diese Maßnahme wird auch bei verhältnismäßig dünnwandigen Profilen eine hohe Festigkeit erzielt, zumal auch der die Schraubenköpfe bzw. Schraubenmuttern aufnehmende Strangpreßprofilabschnitt dickwandiger ausgeführt werden und sich großflächig auf den Schenkeln bzw. Rippen der Profilschiene abstützen kann. Ein Aufweiten der Längsnut des Strangpreßprofilabschnittes sowie eine Verformung der Profilschiene wird dadurch verhindert.

Die Erfindung wird nachfolgend anhand eines Ausführungsbeispiels, das auch in der Zeichnung dargestellt ist, näher beschrieben. Es zeigen:

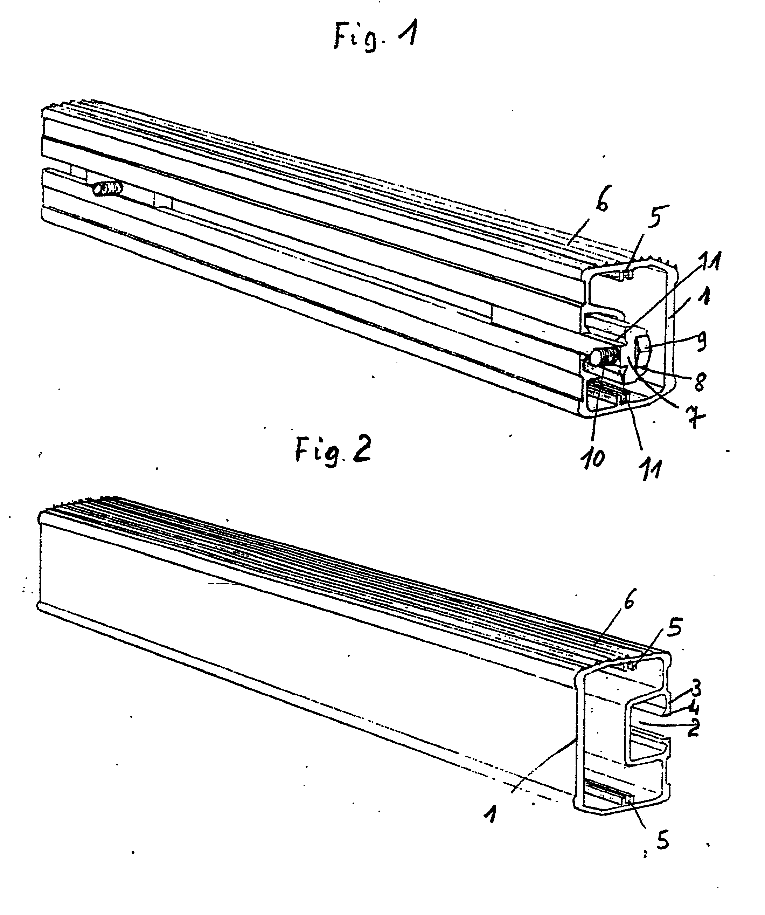

Fig. 1 eine perspektivische Ansicht einer Profilschiene mit einem eingesetzten Strangpreß&profilabschnitt und

Fig. 2 eine perspektivische Ansicht dieser Profilschiene von der Gegenseite her gesehen.

Wie die Zeichnung zeigt, wird eine Profilschiene 1, die als Stoßstange oder Unterfahrschutz bei LKWs vorgesehen ist, aus einem stranggepreßten Aluminiumhohlkastenprofil gebildet, welches auf der dem Fahrzeug zugewandten Seite eine T-förmige Nut 2 aufweist, die durch zwei nach einwärts stehende Schenkel 3 gebildet ist. Diese Nut dient zur Aufnahme von Strangpreßprofilabschnitten 7, in welche die Befestigungsschrauben 10 eingesetzt sind. Zur Aufnahme der Schraubenköpfe 9 dieser Befestigungsschrauben 10 weisen die Strangpreßprofilabschnitte 7 eine Längsnut 8 auf, welche genau die Schlüsselweite der Schraubenköpfe 9 hat und diese somit gegen Verdrehen sichert. Die Strangpreßprofilabschnitte 7 können in Nut 2 beliebig verschoben und an der richtigen e mittels der Schrauben 10 am Chassis des F euges fixiert werden. Beim Anziehen der Schrauben 10 werden die Strangpreßprofilabschnitte 7 in der Nut 2 festgeklemmt und damit die Profilschiene 1 unverrückbar mit dem Fahrzeug verbunden.

Um ein Herausreißen der Strangpreßprofilabschnitte 7 bei durch Kollisionen hervorgerufenen hohen Belastungen sicher zu vermeiden, weisen die Strangpreßprofilabschnitte 7 dreiecksförmige Nuten 11 auf, in die ebenfalls dreiecksförmige Rippen 4 an den Enden der Schenkel 3 formschlüssig eingreifen. Es wird damit eine direkte Verbindung der Schenkel 3 miteinander über die Strangpreßprofilabschnitte 7 bewirkt, wodurch ein Auseinanderdrücken dieser Schenkel sicher verhindert wird. Die Profilschiene 1 weist noch Nuten 5 auf, welche zur Befestigung von nicht dargestellten Endkappen oder Seitenteilen dient. An der Oberseite der Profilschiene kann eine Verrippung 6 vorgesehen sein, die ein Abrutschen des Fusses bei Verwendung als Trittstufe verhindert.

Die Erfindung ist auf das dargestellte Ausführungsbeispiel nicht beschränkt, da diese Verbindung nicht nur bei Stoßstangen und Schienen für den Unterfahrschutz für LKWs anwendbar ist, sondern auch zum Beispiel für verstellbare Dachgepäcksträgerschienen, Straßenleitschienen, Geländer und dgl., sowie für Tragschienen im Architekturbereich, wenn eine leicht verstellbare Befestigung erforderlich ist, um sich unterschiedlichen Schraubenlochabständen und dgl. anpassen zu können.

**Patentansprüche**

1. Befestigung einer Profilschiene (1), insbesondere Stoßstange und dgl., mittels Schrauben (10), die in einer hinterschnittenen Nut (2) an der Profilschiene längenverschieblich eingesetzt sind, wobei der Schraubenkopf (9) bzw. eine Schraubenmutter durch ein profiliertes Einsatzstück unterlegt ist, dadurch gekennzeichnet, daß das Einsatzstück als Strangpreßprofilabschnitt (7) mit einer Längsnut (8) ausgebildet ist, wobei der Schraubenkopf (9) bzw. die Schraubenmutter in diese Längsnuten (8) des Strangpreßprofilabschnitts (7) eingesetzt ist und diese Längsnut eine Weite von der Schlüsselweite des Schraubenkopfes bzw. der Schraubenmutter aufweist und daß der Strangpreßprofilabschnitt (7) mit einer Bohrung zum Durchsetzen der Schraube (10) versehen ist.

2. Befestigung nach Anspruch 1, dadurch gekennzeichnet, daß der Strangpreßprofilabschnitt (7) auf seiner der Nutöffnung der Profilschiene (1) zugewandten Seite Nuten (11) aufweist, in die gegengleich geformte, nach einwärts stehende Rippen (4) vorzugsweise mit dreiecksförmigem Querschnitt der die hinterschnittene Nut (2) bildenden Schenkel (3) formschlüssig eingreifen.

**Claims**

1. Fixing device of a profiled rail (1), particularly a bumper, and the like, by means of screws (10) which are inserted in an undercut groove (2) of the profiled rail and can be moved in longitudinal direction, a profiled insertion being placed underneath the screw head (9) or a screw nut, characterized in that the insertion is formed as part (7) of an extruded section ha, a longitudinal groove (8), the screw head (9) or the screw nut being inserted in said longitudinal grooves (8) of the part (7) of an extruded section and said longitudinal groove having the same width as the opening of the screw head or of the screw nut and that the part (7) of the extruded section has a bore where the screw (10) passes through.

2. Fixing device according to claim 1, characterized in that the part (7) of the extruded section has, on the side directed to wards the groove opening of the profiled rail (1), grooves (11), where inwardly directed counterpart ribs (4) of preferably triangular cross section of the legs (3) forming the undercut groove (2) engage positively.

**Revendications**

1. Elément de fixation d'un rail profilé (1), en particulier un pare-chocs ou organe analogue, à l'aide de vis (10), qui sont introduites, en pouvant coulisser longitudinalement, dans une rainure (2) détalonnée du rail profilé, une pièce profilée insérée étant disposée sous la tête (9) de vis ou sous un écrou, élément caractérisé en ce que la pièce insérée a la forme d'un tronçon (7) de profilé filé comportant une rainure (8) longitudinale, la tête (9) de vis ou l'écrou étant inséré dans cette rainure (9) longitudinale du tronçon (7) de profilé filé et cette rainure longitudinale présentant une certaine distance de jeu par rapport à la largeur sur pans de la tête de vis ou de l'écrou, et le tronçon (7) de profilé filé comportant un trou destiné à permettre le passage de la vis ou des vis (10).

2. Elément de fixation selon la revendication 1, caractérisé en ce que le tronçon (7) de profilé filé présente, sur son côté tourné vers l'ouverture de la rainure du rail profilé (1), des rainures (11) dans lesquelles pénètrent, avec blocage par effet de forme(s), des nervures (4) de forme complémentaire, faisant saillie vers l'intérieur et présentant avantageusement une section de forme triangulaire, de la branche (3) formant une rainure (2) détalonnée.

# Fig. 1

# Fig. 2